(19) Europäisches Patentamt
European Patent Office
Office européen des brevets

(11) EP 4 692 156 A1

# (12) EUROPEAN PATENT APPLICATION
published in accordance with Art. 153(4) EPC

(43) Date of publication:
**11.02.2026 Bulletin 2026/07**

(21) Application number: **24778711.2**

(22) Date of filing: **07.02.2024**

(51) International Patent Classification (IPC):
***C08G 59/50*** *(2006.01)* ***C08L 63/00*** *(2006.01)*
***E01C 7/30*** *(2006.01)*

(52) Cooperative Patent Classification (CPC):
**C08G 59/50; C08L 63/00; E01C 7/30**

(86) International application number:
**PCT/JP2024/004212**

(87) International publication number:
**WO 2024/202566 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.03.2023 JP 2023049297**

(71) Applicant: **MITSUBISHI GAS CHEMICAL COMPANY, INC.**
**Chiyoda-ku**
**Tokyo 100-8324 (JP)**

(72) Inventors:
- **KAWASHIMA, Yuki**
  **Hiratsuka-shi, Kanagawa 254-0016 (JP)**
- **HANAOKA, Takuma**
  **Hiratsuka-shi, Kanagawa 254-0016 (JP)**

(74) Representative: **Gille Hrabal Partnerschaftsgesellschaft mbB**
**Patentanwälte**
**Brucknerstraße 20**
**40593 Düsseldorf (DE)**

## (54) PAVING MATERIAL COMPOSITION AND STRUCTURE

(57) A paving material composition containing: an epoxy resin; an epoxy resin curing agent containing a reaction composition (A) containing a reaction product of styrene and a polyamine compound represented by the following formula (1); and an aggregate.

$$H_2N\text{-}CH_2\text{-}X\text{-}CH_2\text{-}NH_2 \qquad (1)$$

wherein X is a phenylene group.

EP 4 692 156 A1

## Description

Technical Field

The present invention relates to a paving material composition and a structure.

Background Art

Natural stone is used as an aggregate in landscape paving materials. By using natural stone, a paving material that blends in with the landscape of parks, tourist spots, and the like better than asphalt or concrete can be obtained.
For pavement materials for landscape paving, the obtained structure needs to be strong, and generally it is also desirable to have high water permeability.
Paving material compositions that use an epoxy resin composition as a binder resin are known. For example, PTL 1 describes that a resin composition for a water-permeable paving material composed of a liquid epoxy resin, an amine-based curing agent such as m-xylylenediamine or acrylonitrile-modified m-xylylenediamine, and a xylene formaldehyde resin reduces aggregate chipping and cracking.
PTL 2 discloses that a resin composition for water-permeable paving material composed of an amine-based curing agent such as an epoxy resin, m-xylylenediamine, or acrylonitrile-modified m-xylylenediamine, an adhesion promoter, and a xylene formaldehyde resin, is less susceptible to deterioration due to contact with water or warm water, has high initial tensile strength and tensile elongation at break, has excellent chemical resistance, and further has excellent adhesion to aggregate particles.
PTL 3 discloses that a resin composition for paving composed of an epoxy resin main agent, which contains at least an epoxy resin and a diluent and has a viscosity at 25°C of 10 poise or less, and a Mannich-modified metaxylylenediamine as a curing agent, has excellent workability, can be applied at low temperatures, and provides a robust water-permeable pavement structure that has excellent aggregate adhesion.

Citation List

Patent Literature

PTL 1: JP 7-11106 A
PTL 2: JP 2001-158854 A
PTL 3: JP 2000-80152 A

Summary of Invention

Technical Problem

Since paving materials for landscape paving are usually used outdoors, it is important such paving materials not only have high initial strength, but also that their strength does not decrease after exposure to rain and the like. Further, when an aggregate containing water is used in a paving material composition, the curability of the composition and the strength of the obtained structure may decrease.
An object of the present invention is to provide a paving material composition that can form a structure having high strength, having an excellent strength retention rate even in a humid environment, and in particular, even when a wet aggregate is used, the paving material composition has good curability and can form the structure having high strength.

Solution to Problem

The present inventors have discovered that the above problem can be solved by a paving material composition containing an epoxy resin, a predetermined epoxy resin curing agent, and an aggregate.
That is, the present invention relates to the following.

[1] A paving material composition containing:

an epoxy resin;
an epoxy resin curing agent containing a reaction composition (A) containing a reaction product of styrene and a

polyamine compound represented by the following formula (1); and
an aggregate,

$$H_2N\text{-}CH_2\text{-}X\text{-}CH_2\text{-}NH_2 \qquad (1)$$

wherein X is a phenylene group.

[2] The paving material composition according to the above [1], wherein a mass ratio of the epoxy resin to the aggregate, [epoxy resin/aggregate], is in a range of 0.005 to 0.5.
[3] The paving material composition according to the above [1] or [2], wherein the aggregate has a moisture content of 30% by mass or less.
[4] The paving material composition according to any one of the above [1] to [3], wherein the aggregate has a particle size of 0.002 to 50 mm.
[5] A structure containing a cured product of the paving material composition according to any one of the above [1] to [4].

Advantageous Effects of Invention

According to the present invention, it is possible to provide a paving material composition that can form a structure having high strength, having an excellent strength retention rate even in a humid environment, and in particular, even when a wet aggregate is used, the paving material composition has good curability and can form the structure having high strength.

Description of Embodiments

[Definitions]

As used herein, "paving material composition" refers to a composition that contains a paving aggregate and is used to form a paving material. The "paving material composition" in the present invention does not encompass compositions that do not contain an aggregate, such as a primer used for a paving material.
As used herein, "reaction composition containing a reaction product of styrene and a polyamine compound represented by formula (1)" refers to the product obtained by reacting styrene with the polyamine compound, and refers to a composition that contains not only the reaction product (adduct) of styrene and the polyamine compound, but also by-products other than the reaction product, unreacted raw materials, and the like.
As used herein, "wet aggregate" means an aggregate having a moisture content of 3% by mass or more, and preferably 5% by mass or more.
As used herein, the strength of the structure obtained by curing the paving material composition can be evaluated by the method described in the Examples, using the maximum bending stress as an index. In the following description, "strength of the structure" means the initial strength of the structure, unless otherwise specified, and a high initial strength of the structure means that the value of the maximum bending stress before the structure is immersed in water is large.
Further, the strength retention rate of the structure in a humid environment is a value determined based on the ratio between the initial (before immersion in water) maximum bending stress of the obtained structure and the maximum bending stress after immersion in water for a predetermined period of time, and can be calculated specifically by the method described in the Examples.

[Paving material composition]

The paving material composition of the present invention (hereinafter also simply referred to as the "composition (of the present invention)") contains: an epoxy resin; an epoxy resin curing agent containing a reaction composition (A) containing a reaction product of styrene and a polyamine compound represented by the following formula (1); and an aggregate.

$$H_2N\text{-}CH_2\text{-}X\text{-}CH_2\text{-}NH_2 \qquad (1)$$

In formula (1), X is a phenylene group.
By having the above-described configuration, the composition of the present invention can form a structure having high strength, having an excellent strength retention rate even in a humid environment, and in particular, even when a wet aggregate is used, the composition has good curability and can form the structure having high strength.

The reason why the composition of the present invention exhibits the above-described effects is not entirely clear, but it is thought to be as follows.

The polyamine compounds that are generally used as an amine-based curing agent are water-soluble, and therefore dissolve in water in the presence of water, reducing their reactivity with epoxy resins, which are usually hydrophobic. Further, the polyamine compound dissolved in water reacts with carbon dioxide in the air, is converted into a carbonate, and becomes inactive as an epoxy resin curing agent. Therefore, it is thought that such a polyamine compound will have a reduced reactivity with an epoxy resin even if the water is evaporated after being dissolved in water, and the crosslink density of the resulting cured product decreases.

In contrast, the reaction composition (A) used as an epoxy resin curing agent in the present invention is hydrophobic, and therefore does not dissolve in water even in the presence of water, and can react sufficiently with a hydrophobic epoxy resin. Further, since the reaction composition (A) is not only hydrophobic but also has low viscosity, it can expel water while impregnating the aggregate surface in the composition. As a result, it is thought that close contact between the aggregate and the epoxy resin composition components (epoxy resin + epoxy resin curing agent) is improved, and that close contact between the aggregate particles is also strengthened. In addition, it is thought that the expelled water also contributes to promotion of an epoxy ring-opening reaction of the epoxy resin. Therefore, it is thought that even when a wet aggregate is used, the composition of the present invention has good curability and can form a structure having high strength.

Each component used in the composition of the present invention is now described below.

<Epoxy resin>

The epoxy resin is not particularly limited as long as it has two or more glycidyl groups that can react with an active hydrogen in an epoxy resin curing agent described later. The epoxy resin may be any of a saturated or unsaturated aliphatic compound, an alicyclic compound, an aromatic compound, and a heterocyclic compound. From the viewpoint of the strength of the structure obtained by curing the paving material composition, the strength retention rate in a humid environment, and improvement of curability when using a wet aggregate, the epoxy resin is preferably an epoxy resin containing an aromatic ring or an alicyclic structure in the molecule.

Specific examples of the epoxy resin include at least one selected from an epoxy resin having a glycidylamino group derived from metaxylylenediamine, an epoxy resin having a glycidylamino group derived from paraxylylenediamine, an epoxy resin having a glycidylamino group derived from 1,3-bis(aminomethyl)cyclohexane, an epoxy resin having a glycidylamino group derived from 1,4-bis(aminomethyl)cyclohexane, an epoxy resin having a glycidylamino group derived from diaminodiphenylmethane, an epoxy resin having a glycidylamino group and/or glycidyloxy group derived from paraaminophenol, an epoxy resin having a glycidyloxy group derived from bisphenol A, an epoxy resin having a glycidyloxy group derived from bisphenol F, an epoxy resin having a glycidyloxy group derived from hydrogenated bisphenol A, an epoxy resin having a glycidyloxy group derived from hydrogenated bisphenol F, an epoxy resin having a glycidyloxy group derived from phenol novolac, and an epoxy resin having a glycidyloxy group derived from resorcinol. These epoxy resins can also be used in combination of two or more.

Even among the above, from the viewpoint of the strength of the structure obtained by curing the paving material composition, the strength retention rate in a humid environment, and improvement of curability when using a wet aggregate, the epoxy resin preferably has as a main component at least one selected from the group consisting of an epoxy resin having a glycidylamino group derived from metaxylylenediamine, an epoxy resin having a glycidylamino group derived from paraxylylenediamine, an epoxy resin having a glycidyloxy group derived from bisphenol A, and an epoxy resin having a glycidyloxy group derived from bisphenol F, and from the viewpoint of the strength of the obtained structure, the strength retention rate in a humid environment, and improvement of curability when using a wet aggregate, and the viewpoint of availability and economy, the epoxy resin preferably has as a main component an epoxy resin having a glycidyloxy group derived from bisphenol A.

As used herein, "main component" means that other components may be included up to a range that does not depart from the spirit of the present invention, and the main component is preferably from 50 to 100% by mass, more preferably from 70 to 100% by mass, further preferably from 90 to 100% by mass, of the whole.

The epoxy resin may be either a solid epoxy resin or a liquid epoxy resin, but from the viewpoint of the strength of the obtained structure and the strength retention rate in a humid environment, a liquid epoxy resin is more preferable. As used in the present invention, "solid epoxy resin" means an epoxy resin that is a solid at room temperature (25°C), and "liquid epoxy resin" means an epoxy resin that is a liquid at room temperature (25°C).

The epoxy resin may contain a reactive diluent in addition to the above-described epoxy resin that can be included as a main component from the viewpoint of improving handleability. Examples of the reactive diluent include low-molecular-weight compounds having at least one epoxy group, specifically aromatic monoglycidyl ethers such as phenyl glycidyl ether and cresyl glycidyl ether; alkyl monoglycidyl ethers such as butyl glycidyl ether, hexyl glycidyl ether, octyl glycidyl ether, decyl glycidyl ether, lauryl glycidyl ether, and tetradecyl glycidyl ether; diglycidyl ethers of aliphatic diols such

as 1,3-propanediol diglycidyl ether, 1,4-butanediol diglycidyl ether, neopentyl glycol diglycidyl ether, and 1,6-hexanediol diglycidyl ether.

The above reactive diluents can be used alone or in combination of two or more.

An epoxy equivalent weight of the epoxy resin is, from the viewpoint of the strength of the structure obtained by curing the paving material composition, the strength retention rate in a humid environment, and improvement of curability when using a wet aggregate, preferably 80 g/eq or more, more preferably 100 g/eq or more, further preferably 120 g/eq or more, and still further preferably 150 g/eq or more, and from the viewpoint of handleability, is preferably 1000 g/eq or less, more preferably 800 g/eq or less, further preferably 500 g/eq or less, still further preferably 300 g/eq or less, and still further preferably 200 g/eq or less.

A commercially available product can also be used as the main agent epoxy resin. Examples of commercially available epoxy resins include "jER825", "jER827", "jER828", "jER801N", "jER801PN", "jER802", "jER811", "jER813", "jER819", "jER806", "jER806H", "jER807", and the like, manufactured by Mitsubishi Chemical Corporation.

<Epoxy resin curing agent>

The epoxy resin curing agent contains a reaction composition (A) containing a reaction product of styrene and a polyamine compound represented by the following formula (1).

$$H_2N\text{-}CH_2\text{-}X\text{-}CH_2\text{-}NH_2 + \qquad (1)$$

In formula (1), X is a phenylene group.

(Reaction composition (A))

The epoxy resin curing agent contains a reaction composition (A) containing a reaction product of styrene and a polyamine compound represented by the above formula (1). By using an epoxy resin curing agent containing the reaction composition (A), it is possible to obtain a structure having high strength, having an excellent strength retention rate even in a humid environment, and in particular, even when a wet aggregate is used, the paving material composition has good curability and can form the structure having high strength.

In the above formula (1), X is a 1,2-phenylene group, a 1,3-phenylene group or a 1,4-phenylene group, preferably a 1,3-phenylene group or a 1,4-phenylene group, and more preferably a 1,3-phenylene group. That is, the polyamine compound represented by formula (1) is one or more xylylenediamine selected from the group consisting of o-xylylenediamine, m-xylylenediamine (metaxylylenediamine; MXDA), and p-xylylenediamine (paraxylylenediamine; PXDA), preferably one or more selected from the group consisting of metaxylylenediamine and paraxylylenediamine, and more preferably metaxylylenediamine.

From the viewpoint of the strength of the structure obtained by curing the paving material composition, the strength retention rate in a humid environment, and improvement of curability when using a wet aggregate, the reaction composition (A) preferably contains 95% by mass or more, more preferably 98% by mass or more, and further preferably 99% by mass or more of the reaction product of styrene and the polyamine compound represented by the above formula (1). The upper limit is 100% by mass.

In particular, it is preferable that the reaction composition (A) contains 10% by mass or more of the compound represented by the following formula (2).

[Formula 1]

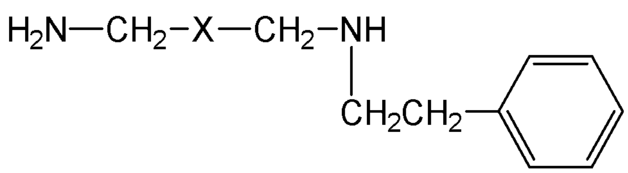

(2)

In formula (2), X is the same as described above.

The compound represented by the above formula (2) is, among the reaction products of styrene and a polyamine compound (hereinafter also referred to as "raw material polyamine") represented by the above formula (1), a reaction product obtained by an addition reaction of 1 mole of styrene and 1 mole of raw material polyamine (hereinafter this is also referred to as "1:1 adduct").

The reaction composition (A) may contain, in addition to the 1:1 adduct of styrene and raw material polyamine,

which is a compound represented by the above formula (2), multiadducts such as a 2:1 adduct, 3:1 adduct, and 4:1 adduct of styrene and the raw material polyamine. However, among these adducts, the 1: 1 adduct of styrene and the raw material polyamine has the lowest active hydrogen equivalent weight. The active hydrogen equivalent weight (hereinafter also referred to as "AHEW") is the molecular weight per 1 equivalent weight of active hydrogen that can react with the above-described epoxy resin. Therefore, an epoxy resin curing agent in which the reaction composition (A) containing a large amount of the compound represented by the above formula (2) can exhibit good curability even when the amount blended in the paving material composition is small.

From the viewpoint of obtaining the above effects, the content of the compound represented by formula (2) in the reaction composition (A) is more preferably 20% by mass or more, further preferably 30% by mass or more, and still further preferably 45% by mass or more, and is 100% by mass or less.

The content of the compound represented by formula (2) in the reaction composition (A) can be determined by gas chromatography (GC) analysis.

The active hydrogen equivalent weight ("AHEW") of the reaction composition (A) is preferably 130 or less, more preferably 120 or less, and further preferably 110 or less. When the AHEW of the reaction composition (A) is 130 or less, good curability is exhibited even when the amount blended in the paving material composition is small. From the viewpoint of ease of manufacture and the like, the AHEW of the reaction composition (A) is preferably 80 or more, and more preferably 90 or more.

The AHEW of the reaction composition (A) can be determined, for example, by titration.

Further, the content of the polyamine compound represented by the above formula (1) in the reaction composition (A) is, from the viewpoint of the strength of the structure obtained by curing the paving material composition, the strength retention rate in a humid environment, and improvement of curability when using a wet aggregate, preferably 5% by mass or less, more preferably 2% by mass or less, and further preferably 1% by mass or less.

The reaction composition (A) is obtained by reacting styrene and a polyamine compound represented by formula (1) by a known method. More specifically, the reaction composition (A) is obtained by subjecting styrene and the raw material polyamine to an addition reaction in the presence of a basic catalyst such as an alkali metal, an alkali metal amide (represented by the formula MNRR', where M is an alkali metal, N is nitrogen, and R and R' are each independently hydrogen or an alkyl group), or an alkylated alkali metal, preferably at 50 to 120°C, and more preferably at 70 to 100°C.

In the addition reaction between styrene and the raw material polyamine, the amount of the basic catalyst used is, when the total amount of the raw material polyamine and styrene used is 100 mol%, preferably from 0.1 to 20 mol%, more preferably from 0.5 to 15 mol%, further preferably 1.0 to 12 mol%, and still further preferably from 1.5 to 10 mol%.

In addition, the amount of styrene and the raw material polyamine used in the addition reaction is, from the viewpoint of obtaining the compound represented by formula (2) with high selectivity, preferably such that the molar ratio of styrene to 1 mole of raw material polyamine is preferably in the range of from 0.1 to 5.0 mol, more preferably from 0.4 to 3.0 mol, further preferably from 0.5 to 1.5 mol, and still further preferably from 0.8 to 1.2 mol.

As the reaction composition (A), a commercially available product such as "Gaskamine 240" manufactured by Mitsubishi Gas Chemical Company, Inc. can also be used.

The content of the reaction composition (A) in the epoxy resin curing agent is, from the viewpoint of the strength of the structure obtained by curing the paving material composition, the strength retention rate in a humid environment, and improvement of curability when using a wet aggregate, preferably 30% by mass or more, more preferably 50% by mass or more, further preferably 70% by mass or more, still further preferably 85% by mass or more, still further preferably 90% by mass or more, and still further preferably 95% by mass or more, and is 100% by mass or less.

(Other curing agent components)

The epoxy resin curing agent may further contain other curing agent components other than the reaction composition (A). Examples of "other curing agent components" include a polyamine compound other than the reaction composition (A) or a modified product thereof.

Examples of the polyamine compound include a chain aliphatic polyamine compound such as ethylenediamine, diethylenetriamine, triethylenetetramine, tetraethylenepentamine, pentaethylenehexamine, hexamethylenediamine, 2-methylpentamethylenediamine, and trimethylhexamethylenediamine; an aliphatic polyamine compound having an aromatic ring such as a polyamine compound represented by formula (1); a polyamine compound having an alicyclic structure such as menthenediamine, isophoronediamine, norbomanediamine, tricyclodecanediamine, adamantanediamine, diaminocyclohexane, 1,2-bis(aminomethyl)cyclohexane, 1,3-bis(aminomethyl)cyclohexane, 1,4-bis(aminomethyl)cyclohexane, 1,4-diamino-2-methylcyclohexane, 1,4-diamino-3,6-diethylcyclohexane, diaminodiethylmethylcyclohexane, 3,3'-dimethyl-4,4'-diaminodicyclohexylmethane(bis(4-amino-3-methylcyclohexyl)methane), 3,3',5,5'-tetramethyl-4,4'-diaminodicyclohexylmethane, and 4,4'-diaminodicyclohexylmethane; an aromatic polyamine compound such as phenylenediamine, diaminodiphenylmethane, diaminodiphenylsulfone, diethyltoluenediamine, 2,2'-diethyl-4,4'-methylenedianiline; a polyamine compound having a heterocyclic structure such as N-aminomethylpiperazine, N-aminoethylpiperazine, and N,N'-bis(aminoethyl)piperazine; a polyether polyamine compound, and the like.

Further, examples of a modified product of the polyamine compound include a Mannich-modified product, epoxy-modified product, Michael adduct, Michael addition/polycondensate, styrene-modified product (excluding a styrene modified product of the polyamine compound represented by formula (1)), modified polyamide, and the like of the compounds described above. These can be used alone or in combination of two or more.

However, from the viewpoint of obtaining the effects of the present invention more effectively, the content of curing agent components other than the reaction composition (A) in the epoxy resin curing agent is preferably 70% by mass or less, more preferably 50% by mass or less, further preferably 30% by mass or less, still further preferably 15% by mass or less, still further preferably 10% by mass or less, and still further preferably 5% by mass or less, and may be 0% by mass.

The active hydrogen equivalent weight (AHEW) of the epoxy resin curing agent is, from the viewpoint of expressing high curability even if the amount added to the paving material composition is small, preferably 150 or less, more preferably 140 or less, further preferably 130 or less, and still further preferably 120 or less. On the other hand, from the viewpoint of the strength of the structure obtained by curing the paving material composition, the strength retention rate in a humid environment, and improvement of curability when using a wet aggregate, the AHEW of the curing agent is preferably 80 or more, and more preferably 90 or more.

<Aggregate>

The aggregate used in the present invention is preferably an inorganic particulate aggregate for landscape paving. The aggregate may be either a natural aggregate or an artificial aggregate, but from the viewpoint of use as a paving material for landscape paving, a natural aggregate such as natural stone is preferable.

Specific examples of the aggregate include pebbles, river gravel, crushed stone, silica stone, river sand, crushed sand, silica sand, slag, glass beads, crushed glass pieces, crushed pottery pieces, ceramic balls, processed industrial waste products, as well as powders or fine particles of alumina, clay, talc, glass, mica, calcium carbonate, barium sulfate, aluminum oxide, and aluminum hydroxide. One or more of these can be used.

Among the above, from the viewpoint of use in landscape paving, and the viewpoint of the strength of the structure obtained by curing the paving material composition, the strength retention rate in a humid environment, and improvement of curability when using a wet aggregate, as the aggregate, at least one type selected from the group consisting of pebbles and silica sand is preferable, and silica sand is more preferable.

The particle size of the aggregate is not particularly limited, but is preferably from 0.002 to 50 mm, more preferably from 0.01 to 30 mm, further preferably from 0.1 to 20 mm, still further preferably from 0.2 to 10 mm, still further preferably from 0.5 to 5 mm, and still further preferably from 0.5 to 3 mm. If the particle size of the aggregate is 0.002 mm or more, the strength of the obtained structure, the strength retention rate in a humid environment, and the effect of improved curability when using a wet aggregate are good. Further, if the particle size of the aggregate is 50 mm or less, the effect of improved waterproofing of the obtained structure is good.

The particle size of the aggregate can be determined by a method that complies with JIS A1204:2020 "Testing method for soil particle size".

The particle size classification of silica sand is classified into No. 3 to No. 8 in JIS G 5901:2016. When the aggregate is silica sand, the particle size classification of the silica sand is, from the viewpoint of the strength of the structure obtained by curing the paving material composition, the strength retention rate in a humid environment, and improvement of curability when using a wet aggregate, preferably silica sand No. 3 to No. 7, more preferably silica sand No. 3 to No. 5, and even more preferably silica sand No. 4 to No. 5.

The particle shape of the aggregate is not particularly limited, and may be either spherical or non-spherical. Spherical includes nearly spherical shapes such as shapes having an elliptical cross section. Non-spherical particle shapes include plate-like, scale-like, chainlike, columnar, crushed pieces, and the like.

The moisture content of the aggregate is not particularly limited, but from the viewpoint of the strength of the obtained structure and the strength retention rate in a humid environment, it is preferably 30% by mass or less, more preferably from 0.1 to 30% by mass, further preferably from 0.1 to 25% by mass, still further preferably from 0.2 to 25% by mass, still further preferably from 0.5 to 25% by mass, still further preferably from 1.0 to 25% by mass, still further preferably from 3.0 to 25% by mass, and still further preferably from 5.0 to 25% by mass. The paving material composition of the present invention has the effect that even if an aggregate having a high moisture content is used, the composition has an excellent curability and a cured product (structure) thereof having high strength can be formed.

The moisture content of the aggregate referred to here means the moisture content of the aggregate during blending into the composition of the present invention. Specifically, the moisture content of the aggregate can be measured by the method described in the Examples.

<Other components>

Further, known modifying components such as plasticizers, known flow adjusting components such as thixotropic agents, and known other components such as leveling agents, tackifiers, and curing accelerators may be blended with the paving material composition, within a range not impairing the effects of the present invention.

<Content>

The content or content ratio of each component in the paving material composition is preferably in the following range.

The ratio between the epoxy resin and the epoxy resin curing agent in the paving material composition is, from the viewpoint of curability and the viewpoint of the strength of the obtained structure, the strength retention rate in a humid environment, and improvement of curability when using a wet aggregate, set such that the ratio of the number of active hydrogens in the epoxy resin curing agent to the number of epoxy groups in the epoxy resin, [number of active hydrogens/number of epoxy groups], is preferably 1/0.8 to 1/1.2, more preferably 1/0.9 to 1/1.1, and further preferably 1/1.

The mass ratio of the epoxy resin to the aggregate contained in the paving material composition, [epoxy resin/aggregate], is preferably in the range of 0.005 to 0.5, more preferably 0.01 to 0.3, further preferably 0.01 to 0.2, and still further preferably 0.01 to 0.1. If [epoxy resin/aggregate] is 0.005 or more, the aggregate tends not to fall out of the obtained structure, and if [epoxy resin/aggregate] is 0.5 or less, the strength of the obtained structure, the strength retention rate in a humid environment, and the curability when using a wet aggregate are further improved.

When the aggregate used is a wet aggregate, it is preferable that the mass ratio of the epoxy resin to the dry mass of the aggregate is within the above-described range.

The content of the epoxy resin in the paving material composition is, from the viewpoint of curability and the viewpoint of the strength of the obtained structure, the strength retention rate in a humid environment, and improvement of curability when using a wet aggregate, preferably from 0.1 to 30% by mass, more preferably from 0.2 to 25% by mass, further preferably from 0.5 to 20% by mass, still further preferably from 1.0 to 15% by mass, still further preferably from 1.0 to 10% by mass, and still further preferably from 1.5 to 7.0% by mass.

The content of the epoxy resin curing agent in the paving material composition is, from the viewpoint of curability and the viewpoint of the strength of the obtained structure, the strength retention rate in a humid environment, and improvement of curability when using a wet aggregate, preferably from 0.01 to 15% by mass, more preferably from 0.05 to 10% by mass, and further preferably from 0.1 to 5.0% by mass.

The content of the aggregate in the paving material composition is, from the viewpoint of curability and the viewpoint of the strength of the obtained structure, the strength retention rate in a humid environment, and improvement of curability when using a wet aggregate, preferably from 50 to 99.5% by mass, more preferably from 55 to 99% by mass, further preferably from 60 to 99% by mass, still further preferably from 70 to 99% by mass, still further preferably from 80 to 99% by mass, still further preferably from 85 to 99% by mass, and still further preferably from 90 to 99% by mass.

As used herein, "content of the aggregate" means the content based on the dry mass of the aggregate, even in cases where a wet aggregate is used.

The total content of the epoxy resin, epoxy resin curing agent, and aggregate in the paving material composition is, from the viewpoint of the strength of the obtained structure, the strength retention rate in a humid environment, and improvement of curability when using a wet aggregate, preferably 50% by mass or more, more preferably 60% by mass or more, further preferably 70% by mass or more, still further preferably 80% by mass or more, still further preferably 90% by mass or more, and still further preferably 95% by mass or more, and is 100% by mass or less.

The water content in the paving material composition is, from the viewpoint of the strength of the obtained structure and the strength retention rate in a humid environment, preferably 20% by mass or less, more preferably 18% by mass or less, further preferably 15% by mass or less, still further preferably 10% by mass or less, still further preferably 5% by mass or less, and still further preferably 2% by mass or less. However, this water content is the amount of water that is intentionally added, and does not exclude, for example, the moisture content that is already contained in each added component.

The content of an organic solvent in the paving material composition is, from the viewpoint of the strength of the obtained structure and the strength retention rate in a humid environment, preferably 10% by mass or less, more preferably 5% by mass or less, and further preferably 2% by mass or less, and the lower limit is 0% by mass.

There are no particular limitations on the method for producing the epoxy resin composition of the present invention, and the epoxy resin composition of the present invention can be produced by mixing the epoxy resin, epoxy resin curing agent, aggregate, and optionally-used other components using a known method and apparatus.

[Structure]

The structure of the present invention contains a cured product of the paving material composition of the present invention described above. The paving material composition can be cured by a known method. The curing conditions of the paving material composition are appropriately selected according to the usage environment, the form of the structure, and the like, and are not particularly limited, but it is possible to cure the paving material composition under room temperature conditions in the air.

The structure of the present invention is suitable for use as a paving material, particularly as a landscape paving material.

<Structure characteristics>

The paving material composition of the present invention can provide a structure having high strength, and having a high strength retention rate in a humid environment. For example, a 16 cm × 16 cm × 4 cm flat plate structure obtained by curing the paving material composition of the present invention has a maximum bending stress, which is measured when a bending test is performed at a test speed of 1 mm/min in accordance with a method conforming to JIS R 5201:2015, of preferably 2.0 MPa or more, more preferably 2.5 MPa or more, and further preferably 3.0 MPa or more.

Further, the retention rate of the maximum bending stress after immersing the structure in 23°C water for one week is preferably 90% or more, and more preferably 95% or more.

The maximum bending stress and its retention rate can be determined specifically by the method described in the Examples.

A 16 cm × 16 cm × 4 cm flat plate structure obtained by curing the paving material composition of the present invention has a maximum compressive stress, which is measured when a compression test is performed at a test speed of 1 mm/min in accordance with a method conforming to JIS R 5201:2015, of preferably 5.0 MPa or more, more preferably 5.5 MPa or more, and further preferably 6.0 MPa or more.

Further, the retention rate of the maximum compressive stress after immersing the structure in 23°C water for one week is preferably 80% or more, more preferably 85% or more, and further preferably 90% or more.

The maximum compressive stress and its retention rate can be determined specifically by the method described in the Examples. The higher the value of the maximum compressive stress of a structure, the higher the initial strength of the structure, and the higher the retention rate of the maximum compressive stress, the higher the strength retention rate of the structure in a humid environment.

Examples

The present invention will now be described in detail with reference to Examples and Comparative Examples, but the present invention is not limited to the following Examples. The various measurements in the Examples were carried out by the following methods.

(Aggregate moisture content measurement 1)

The moisture content of the aggregates used in Tables 1 and 2 was measured using the following method.

100 to 150 g of aggregate stored at 23°C and 50% R.H. was weighed out, and dried in a hot air drying machine at 110°C. The weight was measured at appropriate times, and at the point when a change in weight was no longer observed, it was assumed that the moisture had completely dried off, and the moisture content of the aggregate was calculated from the following formula.

Aggregate moisture content (mass%) = [(mass of aggregate before drying (g)) - (mass of aggregate after drying (g))] / (mass of aggregate before drying (g)) × 100

(Aggregate moisture content measurement 2)

The moisture content of the wet aggregates (silica sand No. 4 having a moisture content of 5% and 10% by mass) used in Table 3 was calculated from the added amount of water and the silica sand No. 4 before immersion in water.

The moisture content of the wet aggregate (silica sand No. 4 having a moisture content of 20.8% by mass) used in Table 3 was measured using the following method. Silica sand No. 4 that had not been immersed in water was immersed in water at 23°C and left to stand overnight, and then filtered to recover the silica sand No. 4. This silica sand No. 4 was weighed and dried in a hot air drying machine at 110°C, and the moisture content was calculated in the same manner as above.

Production Example 1 (Production of acrylonitrile-1 mol adduct of metaxylylenediamine)

A 1-liter flask equipped with a stirring device, a thermometer, a nitrogen inlet tube, a dropping funnel, and a cooling tube was charged with 136.20 g (1 mol) of metaxylylenediamine (Mitsubishi Gas Chemical Company, Inc., MXDA) and 100 g of methanol, and the resultant mixture was stirred under a nitrogen stream. Next, 53.06 g (1 mol) of acrylonitrile was added dropwise at room temperature over 1.5 hours so that the internal temperature did not exceed 50°C. After the dropwise addition was complete, the temperature was raised to 50°C, and the reaction was carried out for 1 hour. After completion of the reaction, the methanol was distilled off using an evaporator to obtain an acrylonitrile-1 mol adduct of metaxylylenediamine (MXDA-AN1, AHEW: 65).

Production Example 2 (Production of Mannich reaction product of metaxylylenediamine)

A 1-liter flask equipped with a stirring device, a thermometer, a nitrogen inlet tube, a dropping funnel, and a cooling tube was charged with 245.16 g (1.8 mol) of metaxylylenediamine (Mitsubishi Gas Chemical Company, Inc., MXDA) and 93.17 g (0.99 mol) of phenol, and the temperature was raised to 80°C with stirring under a nitrogen stream. Next, 80.35 g (0.99 mol) of formalin (37% aqueous solution) was added dropwise at 80°C over 1.5 hours. After the dropwise addition was complete, the temperature was raised to 96°C and the reaction was carried out for 1 hour. The temperature was raised to 150°C over 1 hour while water was distilled off, and the reaction was carried out at the same temperature for 1 hour to obtain a Mannich reaction product of phenol-formaldehydemetaxylylenediamine (MXDA) (MXDA Mannich, AHEW: 53, viscosity at 25°C: 480 mPa·s).

Example 1-1 and Comparative Examples 1-1 to 1-8

(Preparation and evaluation of paving material composition and cured product (1) - Strength of cured product before and after immersion in water)

The epoxy resin, epoxy resin curing agent, and aggregate (silica sand No. 4, moisture content 0.2% by mass) listed in Table 1 were mixed and manually stirred for 4 minutes under conditions of 23°C and 50% R.H. to prepare a paving material composition. The epoxy resin and the epoxy resin curing agent were mixed so that the number of epoxy groups in the epoxy resin and the number of active hydrogens in the epoxy resin curing agent were equal.

The composition was used for the preparation and the strength evaluation of the cured product using the methods described below. The results are shown in Table 1.

<Maximum bending stress and maximum compressive stress>

The paving material composition shown in Table 1 was placed in a 16 cm × 16 cm × 4 cm mold and cured by aging for one week in the air at 23°C and 50% R.H. The obtained cured product was subjected to a bending test (N=3) and a compression test (N=6) at a test speed of 1 mm/min using a precision universal testing machine ("Autograph AG-Xplus 100kN", manufactured by Shimadzu Corporation) in accordance with a method conforming to JIS R 5201:2015, and the maximum bending stress and maximum compressive stress before immersion in water were measured. The maximum bending stress was the average value of the three measurements, and the maximum compressive stress was the average value of the six measurements.

The cured product was also immersed in 23°C water for a predetermined period of time and subjected to the bending test and compression test in the same manner. The bending stress retention rate and compressive stress retention rate of the cured product after immersion in water were calculated based on the following formulas, respectively.

Bending stress retention rate (%) = (maximum bending stress of the cured product after immersion in water)/(maximum bending stress of the cured product before immersion in water) × 100

Compressive stress retention rate (%) = (maximum compressive stress of the cured product after immersion in water)/(maximum compressive stress of the cured product before immersion in water) × 100

Example 1-2 and Comparative Examples 1-9 to 1-16

The epoxy resin, epoxy resin curing agent, and aggregate (pebbles, moisture content 1.3% by mass) listed in Table 2 were mixed and manually stirred for 4 minutes under conditions of 23°C and 50% R.H. to prepare a paving material composition. The epoxy resin and the epoxy resin curing agent were mixed so that the number of epoxy groups in the

epoxy resin and the number of active hydrogens in the epoxy resin curing agent were equal.

Using this composition, a cured product was prepared and the strength of the cured product was evaluated (maximum bending stress and bending stress retention rate were measured) in the same manner as in Example 1-1 and Comparative Examples 1-1 to 1-8. The results are shown in Table 2.

Example 2-1 and Comparative Examples 2-1 to 2-8

(Preparation and evaluation of paving material composition and cured product (2) - Curability and cured product strength when wet aggregate is used)

<Preparation of wet aggregate>

Silica sand No. 4 having a moisture content of 5% by mass and 10% by mass was prepared in the following manner. A predetermined amount of water was added to silica sand No. 4 before immersion in water to achieve the target moisture content, and the mixture was stirred until the color was visually uniform.

Silica sand No. 4 having a moisture content of 20.8% by mass was prepared in the following manner. 31 g of silica sand No. 4 before immersion in water was weighed out, 50 g of pure water was added, and the mixture was left to stand at 23°C for one day. After leaving the mixture to stand, the water was removed by decantation.

Paving material compositions were prepared using the above three types of wet aggregate in the following manner, and a curability evaluation was performed. The results are shown in Table 3.

<Curability>

The epoxy resin, epoxy resin curing agent, and wet aggregate (silica sand No. 4, moisture content 5% by mass, 10% by mass, and 20.8% by mass) shown in Table 3 were mixed and stirred for 2 minutes under conditions of 23°C and 50% R.H. to prepare a paving material composition. The epoxy resin and the epoxy resin curing agent were mixed so that the number of epoxy groups in the epoxy resin and the number of active hydrogens in the epoxy resin curing agent were equal.

The obtained paving material composition was packed into an aluminum cup measuring 16 cm × 16 cm × 4 cm, and left to stand in the air at 23°C and 50% R.H. The curability after standing for one day was evaluated based on the following criteria. The results are shown in Table 3.

[Evaluation criteria]

A: The cured product cannot be broken by hand.
B: The cured product can be broken by hand, but force is required.
C: The cured product can be easily broken by hand.
D: Not cured at all.

<Maximum bending stress and maximum compressive stress>

The maximum bending stress and maximum compressive stress of the cured products of Example 2-1 and Comparative Example 2-7 (aggregates having a moisture content of 20.8% by mass were used) that were rated "A" for curability in Table 3 were measured by the same method as above. The results are shown in Table 3.

[Table 1]

Table 1

| | | | Example | Comparative Example | | | | | | | |
|---|---|---|---|---|---|---|---|---|---|---|---|
| | | | 1-1 | 1-1 | 1-2 | 1-3 | 1-4 | 1-5 | 1-6 | 1-7 | 1-8 |
| Paving material composition | Epoxy resin | Type | jER828 | jER828 | jER828 | jER828 | jER828 | jER828 | jER828 | jER828 | jER828 |
| | Epoxy resin curing agent | Type | G-240 | MXDA | 1,3-BAC | IPDA | DETA | TETA | MXDA-AN1 | MXDA Mannich | AEP |
| | Aggregate | Type | Silica sand No. 4 | Silica sand No. 4 | Silica sand No. 4 | Silica sand No. 4 | Silica sand No. 4 | Silica sand No. 4 | Silica sand No. 4 | Silica sand No. 4 | Silica sand No. 4 |
| | Epoxy resin/aggregate (mass ratio) | | 0.06 | 0.06 | 0.06 | 0.06 | 0.06 | 0.06 | 0.06 | 0.06 | 0.06 |
| | Number of active hydrogens in curing agent / number of epoxy groups in epoxy resin | | 1/1 | 1/1 | 1/1 | 1/1 | 1/1 | 1/1 | 1/1 | 1/1 | 1/1 |
| | Content of epoxy resin in composition | % by mass | 5.5 | 5.6 | 5.6 | 5.6 | 5.6 | 5.7 | 5.6 | 5.6 | 5.6 |
| | Content of epoxy resin curing agent in composition | % by mass | 3.0 | 1.0 | 1.1 | 1.3 | 0.6 | 0.7 | 1.9 | 1.6 | 1.3 |
| | Content of aggregate in composition | % by mass | 91.5 | 93.4 | 93.3 | 93.1 | 93.8 | 93.6 | 92.5 | 92.8 | 93.1 |
| | Total | % by mass | 100.0 | 100.0 | 100.0 | 100.0 | 100.0 | 100.0 | 100.0 | 100.0 | 100.0 |
| Evaluation results | Maximum bending stress (MPa) | Before immersion in water | 3.84 | 6.92 | 3.85 | 2.06 | 3.77 | 3.67 | 7.21 | 8.87 | 2.59 |
| | | One week after immersion in water | 5.12 | 4.74 | 3.57 | 2.34 | 2.05 | 1.83 | 4.09 | 5.46 | 1.30 |
| | | Two weeks after immersion in water | 5.68 | 3.79 | 2.58 | 2.29 | 1.77 | 1.72 | | | 1.36 |
| | | Four weeks after immersion in water | 5.91 | 3.40 | 2.55 | 2.85 | 1.37 | 1.82 | | | 1.44 |
| | Bending stress retention rate (%) | One week after immersion in water | 133.3 | 68.5 | 92.6 | 113.4 | 54.4 | 49.9 | 56.8 | 61.6 | 50.0 |
| | | Two weeks after immersion in water | 147.9 | 54.7 | 67.1 | 110.8 | 47.1 | 46.9 | | | 52.3 |
| | | Four weeks after immersion in water | 153.8 | 49.1 | 66.3 | 138.0 | 36.5 | 49.5 | | | 55.4 |
| | Maximum compressive stress (MPa) | Before immersion in water | 6.59 | 8.52 | 5.40 | 3.07 | 4.70 | 5.29 | 8.31 | 11.99 | |
| | | One week after immersion in water | 6.20 | 5.27 | 4.41 | 2.85 | 3.02 | 2.84 | 4.78 | 6.08 | |
| | Compressive stress retention rate (%) | One week after immersion in water | 94.0 | 61.8 | 81.8 | 92.9 | 64.3 | 53.7 | 57.5 | 50.8 | |

[Table 2]

Table 2

| | | | Example | Comparative Example | | | | | | | |
|---|---|---|---|---|---|---|---|---|---|---|---|
| | | | 1-2 | 1-9 | 1-10 | 1-11 | 1-12 | 1-13 | 1-14 | 1-15 | 1-16 |
| Paving material composition | Epoxy resin | Type | jER828 | jER828 | jER828 | jER828 | jER828 | jER828 | jER828 | jER828 | jER828 |
| | Epoxy resin curing agent | Type | G-240 | MXDA | 1,3-BAC | IPDA | DETA | TETA | MXDA-AN1 | MXDA Mannich | AEP |
| | Aggregate | Type | Pebbles | Pebbles | Pebbles | Pebbles | Pebbles | Pebbles | Pebbles | Pebbles | Pebbles |
| | Epoxy resin/aggregate (mass ratio) | | 0.02 | 0.02 | 0.02 | 0.02 | 0.02 | 0.02 | 0.02 | 0.02 | 0.02 |
| | Number of active hydrogens in curing agent / number of epoxy groups in epoxy resin | | 1/1 | 1/1 | 1/1 | 1/1 | 1/1 | 1/1 | 1/1 | 1/1 | 1/1 |
| | Content of epoxy resin in composition | % by mass | 1.9 | 1.9 | 1.9 | 2.0 | 2.0 | 1.9 | 1.9 | 1.9 | 2.0 |
| | Content of epoxy resin curing agent in composition | % by mass | 1.1 | 0.4 | 0.4 | 0.5 | 0.2 | 0.3 | 0.7 | 0.6 | 0.5 |
| | Content of aggregate in composition | % by mass | 97.0 | 97.7 | 97.7 | 97.5 | 97.8 | 97.8 | 97.4 | 97.5 | 97.5 |
| | Total | % by mass | 100.0 | 100.0 | 100.0 | 100.0 | 100.0 | 100.0 | 100.0 | 100.0 | 100.0 |
| Evaluation results | Maximum bending stress (MPa) | Before immersion in water | 2.12 | 2.11 | 2.17 | 1.47 | 0.26 | 1.77 | 1.90 | 3.38 | 1.22 |
| | | One week after immersion in water | 3.34 | 1.82 | 2.37 | 1.42 | 1.60 | 1.52 | 2.46 | 2.56 | 1.31 |
| | | Two weeks after immersion in water | 2.65 | 1.06 | 1.31 | 1.11 | 0.95 | 1.55 | | | 1.27 |
| | | Four weeks after immersion in water | 3.56 | 2.03 | 1.40 | 1.58 | 1.51 | 1.54 | | | 1.32 |
| | Bending stress retention rate (%) | One week after immersion in water | 157.8 | 86.5 | 108.9 | 96.5 | 616.0 | 85.4 | 129.4 | 75.8 | 106.9 |
| | | Two weeks after immersion in water | 125.2 | 50.3 | 60.2 | 75.6 | 363.7 | 87.5 | | | |
| | | Four weeks after immersion in water | 167.9 | 96.4 | 64.6 | 107.9 | 582.3 | 86.6 | | | |

[Table 3]

Table 3

| | | | Example | Comparative Example | | | | | | | |
|---|---|---|---|---|---|---|---|---|---|---|---|
| | | | 2-1 | 2-1 | 2-2 | 2-3 | 2-4 | 2-5 | 2-6 | 2-7 | 2-8 |
| Paving material composition | Epoxy resin | Type | jER828 | jER828 | jER828 | jER828 | jER828 | jER828 | jER828 | jER828 | jER828 |
| | Epoxy resin curing agent | Type | G-240 | MXDA | 1,3-BAC | IPDA | DETA | TETA | MXDA-AN1 | MXDA Mannich | AEP |
| | Wet aggregate | Type | Silica sand No. 4 | Silica sand No. 4 | Silica sand No. 4 | Silica sand No. 4 | Silica sand No. 4 | Silica sand No. 4 | Silica sand No. 4 | Silica sand No. 4 | Silica sand No. 4 |
| | Epoxy resin/aggregate (mass ratio)*1 | | 0.06 | 0.06 | 0.06 | 0.06 | 0.06 | 0.06 | 0.06 | 0.06 | 0.06 |
| | Number of active hydrogens in curing agent / number of epoxy groups in epoxy resin | | 1/1 | 1/1 | 1/1 | 1/1 | 1/1 | 1/1 | 1/1 | 1/1 | 1/1 |
| Evaluation results | Curability (aggregate moisture content 5% by mass) | | A | C | C | B | D | D | B | A | C |
| | Curability (aggregate moisture content 10% by mass) | | A | C | C | C | D | D | C | A | D |
| | Curability (aggregate moisture content 20.8% by mass) | | A | D | C | C | D | D | C | A | D |
| | Maximum bending stress (MPa)*2 | Before immersion in water | 3.73 | | | | | | | 1.04 | |
| | Maximum compressive stress (MPa)*2 | Before immersion in water | 5.97 | | | | | | | 1.45 | |

*1: Mass ratio calculated based on the dry mass of the aggregate

*2: Value when aggregate having a moisture content of 20.8% by mass is used.

The components listed in Tables 1 to 3 are as follows.

<Epoxy resin>

jER828:

Liquid epoxy resin having a glycidyloxy group derived from bisphenol A, (manufactured by Mitsubishi Chemical Corporation, epoxy equivalent weight 186 g/eq, solid content concentration 100% by mass)

<Epoxy resin curing agent>

G-240:
Reaction composition containing a reaction product of styrene and metaxylylenediamine, ("Gaskamine 240" manufactured by Mitsubishi Gas Chemical Company, Inc., AHEW: 103)
MXDA:

Metaxylylenediamine, manufactured by Mitsubishi Gas Chemical Company, Inc. 1,3-BAC:
1,3-bis(aminomethyl)cyclohexane, manufactured by Mitsubishi Gas Chemical Company, Inc.

IPDA:
Isophoronediamine
DETA:
Diethylenetriamine
TETA:
Triethylenetetramine
MXDA-AN1:
Acrylonitrile-1 mol adduct of metaxylylenediamine obtained in Production Example 1 MXDA Mannich:

Mannich reaction product of metaxylylenediamine obtained in Production Example 2 AEP:
N-aminoethylpiperazine

<Aggregate>

Silica sand No. 4:
"Nikko Silica Sand No. 4", manufactured by JFE Mineral & Alloy Company, Ltd., particle size 0.6 to 1.2 mm
Pebbles:
"Pebbles that are gentle on aquatic plants and fish", manufactured by Kamihata Fish Industries Ltd., particle size 1 to 5 mm

As shown in Tables 1 and 2, the cured product of the paving material composition of the present invention is strong and has a high strength retention rate even after immersion in water. Further, as shown in Table 3, the paving material composition of the present invention has excellent curability even when an aggregate having a high moisture content is used, and a cured product having a high strength can be obtained.

Industrial Applicability

According to the present invention, it is possible to provide a paving material composition that can obtain a structure having high strength, having an excellent strength retention rate even in a humid environment, and in particular, even when a wet aggregate is used, the paving material composition has good curability and can form a structure having high strength.

## Claims

**1.** A paving material composition comprising:

an epoxy resin;
an epoxy resin curing agent comprising a reaction composition (A) comprising a reaction product of styrene and a polyamine compound represented by the following formula (1); and
an aggregate,

$$H_2N\text{-}CH_2\text{-}X\text{-}CH_2\text{-}NH_2 \qquad (1)$$

wherein X is a phenylene group.

**2.** The paving material composition according to claim 1, wherein a mass ratio of the epoxy resin to the aggregate, [epoxy resin/aggregate], is in a range of 0.005 to 0.5.

**3.** The paving material composition according to claim 1 or 2, wherein the aggregate has a moisture content of 30% by mass or less.

**4.** The paving material composition according to any one of claims 1 to 3, wherein the aggregate has a particle size of 0.002 to 50 mm.

**5.** A structure comprising a cured product of the paving material composition according to any one of claims 1 to 4.

## INTERNATIONAL SEARCH REPORT

International application No.
**PCT/JP2024/004212**

### A. CLASSIFICATION OF SUBJECT MATTER

***C08G 59/50***(2006.01)i; ***C08L 63/00***(2006.01)i; ***E01C 7/30***(2006.01)i
FI: C08G59/50; C08L63/00 C; E01C7/30

According to International Patent Classification (IPC) or to both national classification and IPC

### B. FIELDS SEARCHED

Minimum documentation searched (classification system followed by classification symbols)

C08G59/00-59/72; C08L1/00-101/16; E01C5/00-7/36

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| X | JP 2002-161076 A (MITSUBISHI GAS CHEMICAL COMPANY, INC.) 04 June 2002 (2002-06-04)<br>claims, paragraph [0001], examples | 1-5 |
| X | JP 2004-75989 A (MITSUBISHI GAS CHEMICAL COMPANY, INC.) 11 March 2004 (2004-03-11)<br>claims, paragraphs [0001]-[0002], column "examples", etc. | 1-5 |
| X | JP 2004-263177 A (MITSUBISHI GAS CHEMICAL COMPANY, INC.) 24 September 2004 (2004-09-24)<br>claims, paragraph [0001], column "examples", etc. | 1-5 |
| X | WO 2018/096868 A1 (MITSUBISHI GAS CHEMICAL COMPANY, INC.) 31 May 2018 (2018-05-31)<br>claims, paragraph [0067], column "examples", etc. | 1-5 |
| A | US 2021/0253842 A1 (JIANGSU SINOROAD TRANSPORTATION SCIENCE AND TECHNOLOGY CO., LTD.) 19 August 2021 (2021-08-19) | 1-5 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 April 2024** | **07 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/004212**

**C. DOCUMENTS CONSIDERED TO BE RELEVANT**

| Category* | Citation of document, with indication, where appropriate, of the relevant passages | Relevant to claim No. |
|---|---|---|
| A | CN 113861796 A (SHANXI TRANSPORTATION SCIENCE AND TECHNOLOGY R & D CO., LTD.) 31 December 2021 (2021-12-31) | 1-5 |
| A | CN 106977966 A (JIANGSU SINOROAD TRANSPORTATION SCIENCE AND TECHNOLOGY CO., LTD.) 25 July 2017 (2017-07-25) | 1-5 |
| A | CN 107446119 A (JIANGSU SINOROAD ENGINEERING TECHNOLOGY RESEARCH INSTITUTE CO., LTD.) 08 December 2017 (2017-12-08) | 1-5 |
| A | DE 4437419 A1 (RUETGERSWERKE AG) 25 April 1996 (1996-04-25) | 1-5 |
| A | US 4255468 A (H. B. FULLER COMPANY) 10 March 1981 (1981-03-10) | 1-5 |
| A | US 4185132 A (H. B. FULLER COMPANY) 22 January 1980 (1980-01-22) | 1-5 |
| A | JP 4-102604 A (NIPPON STEEL CHEM CO., LTD.03 April 1992 (1992-04-03) | 1-5 |
| A | JP 2000-80152 A (MITSUBISHI CHEMICAL CORPORATION) 21 March 2000 (2000-03-21) | 1-5 |
| A | JP 7-11106 A (SANYO CHEMICAL INDUSTRIES, LTD.) 13 January 1995 (1995-01-13) | 1-5 |
| A | CN 114891319 A (SOUTHEAST UNIVERSITY) 12 August 2022 (2022-08-12) | 1-5 |

Form PCT/ISA/210 (second sheet) (July 2022)

**INTERNATIONAL SEARCH REPORT**
**Information on patent family members**

International application No.
**PCT/JP2024/004212**

| Patent document cited in search report | Publication date (day/month/year) | Patent family member(s) | Publication date (day/month/year) |
|---|---|---|---|
| JP 2002-161076 A | 04 June 2002 | US 2002/0055605 A1<br>claims, paragraph [0002], column "examples", etc.<br>EP 1188740 A2 | |
| JP 2004-75989 A | 11 March 2004 | US 2004/0044176 A1<br>claims, paragraphs [0002]-[0004], column "examples", etc.<br>EP 1375554 A1 | |
| JP 2004-263177 A | 24 September 2004 | US 2004/0171770 A1<br>claims, paragraph [0003], column "examples", etc.<br>EP 1452554 A1 | |
| WO 2018/096868 A1 | 31 May 2018 | US 2019/0256645 A1<br>claims, paragraph [0140], column "examples", etc.<br>EP 3546494 A1 | |
| US 2021/0253842 A1 | 19 August 2021 | WO 2020/223872 A1 | |
| CN 113861796 A | 31 December 2021 | (Family: none) | |
| CN 106977966 A | 25 July 2017 | (Family: none) | |
| CN 107446119 A | 08 December 2017 | (Family: none) | |
| DE 4437419 A1 | 25 April 1996 | EP 709350 A1 | |
| US 4255468 A | 10 March 1981 | (Family: none) | |
| US 4185132 A | 22 January 1980 | US 4088633 A | |
| JP 4-102604 A | 03 April 1992 | (Family: none) | |
| JP 2000-80152 A | 21 March 2000 | (Family: none) | |
| JP 7-11106 A | 13 January 1995 | (Family: none) | |
| CN 114891319 A | 12 August 2022 | JP 2023-184472 A<br>US 2023/0407083 A1<br>EP 4293063 A1 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 7011106 A
- JP 2001158854 A
- JP 2000080152 A